# EUROPEAN PATENT SPECIFICATION

(11) **EP 2 465 240 B1**
(45) Date of publication and mention of the grant of the patent: **07.11.2018**
(21) Application number: 09848315.9
(22) Date of filing: 11.08.2009
(51) Int. Cl.: H04L 29/06, H04L 12/28

(54) **METHOD AND ARRANGEMENT FOR ENABLING MULTIMEDIA SERVICES FOR A DEVICE IN A LOCAL NETWORK**
VERFAHREN UND ANORDNUNG ZUR AKTIVIERUNG VON MULTIMEDIADIENSTEN FÜR EINE VORRICHTUNG IN EINEM LOKALEN NETZWERK
PROCÉDÉ ET DISPOSITIF AUTORISANT DES SERVICES MULTIMÉDIAS POUR UN DISPOSITIF DANS UN RÉSEAU LOCAL

(43) Date of publication of application: 20.06.2012
(73) Proprietor: Telefonaktiebolaget LM Ericsson (publ), 164 83 Stockholm (SE)
(72) Inventor: PETERSSON, Justus, S-165 72 Hässelby (SE); SKOG, Robert, S-165 76 Hässelby (SE)
(74) Representative: Ericsson
(86) International application number: PCT/SE2009/050929
(87) International publication number: WO 2011/019309

(56) References cited:
- EP-A1- 2 000 917
- WO-A1-2007/069942
- WO-A1-2008/074120
- WO-A1-2008/108699
- WO-A1-2009/080398
- WO-A1-2009/093942
- GB-A- 2 419 774

## Description

### TECHNICAL FIELD

The invention relates generally to a method and arrangement for enabling multimedia services in an external network for a device in a local network.

### BACKGROUND

A multitude of different types of communication terminals or devices have been developed for packet-based multimedia communication using IP (Internet Protocol). Multimedia services typically involve transmission of media in different formats and combinations over IP networks. An architecture called "IP Multimedia Subsystem" (IMS) has also been developed by the 3^{rd} Generation Partnership Project (3GPP) to enable such multimedia services and sessions for user terminals connected to different access networks. The signalling protocol "SIP" (Session Initiation Protocol) is typically used for IMS services, as controlled by specific session control nodes in the IMS network.

3GPP has further defined various solutions and mechanisms for the next generation multimedia telephony, known as "MMTel" for short. In order to access an IMS network and its services, it is required that the terminal used is "IMS-enabled" and "MMTel compliant", i.e. capable of registering and communicating with the IMS network according to prescribed procedures and protocols. However, terminals offered today by many vendors in the Consumer Electronic (CE) industry are actually neither IMS-enabled nor MMTel compliant as required.

Techniques are also being developed for multimedia communication involving devices in a limited local network using internal addressing and transport means, also referred to as a residential or office network, LAN (Local Area Network), private or home network. In this description, the term "local network" represents any such networks, and the term "local device" represents any entity capable of media communication inside a local network. Further, any networks outside the local network are referred to as "external networks".

The local devices may include any types of entities capable of communication within the network, such as fixed and wireless telephones, computers, media players, game units, servers and television boxes, the latter also called "STB" (Set Top Box). As indicated above, a great number of these devices are not IMS-enabled even though they may be configured to use SIP as such, typically according to IETF (Internet Engineering Task Force). Furthermore, other devices occurring in local networks may not even be capable of using SIP, e.g. older so-called "legacy" telephones, PC's and STB's.

The large amount of such non-IMS devices occurring in local networks makes it desirable to provide for an inter-working solution between non-IMS devices and IMS networks, to enhance the market for multimedia services. Therefore, a gateway called "HIGA" (Home IMS Gateway), has been devised as an interface between a local network and an IMS network. The HIGA handles authentication towards the IMS network on behalf of local devices, and translates between internal device-specific messages, e.g. IETF SIP, and external IMS compliant messages, e.g. IMS SIP. The HIGA concept is specified in TISPAN (Telecommunications and Internet converged Services and Protocols for Advanced Networking).

According to 3GPP, it is thus generally required that a communication terminal accessing an IMS network has an "ISIM" (IMS Subscriber Identity Module) application, in order to provide necessary authentication and subscriber data to the IMS network. Among other things, an ISIM typically stores an IMS Private Identity referred to as "IMPI" and at least one IMS Public Identity referred to as "IMPU", both being registered in the IMS network. In short, IMPI is used for authentication, whereas IMPU is used to identify subscribers and/or profiles for IMS services and may be designed in the manner of an e-mail address or a telephone number.

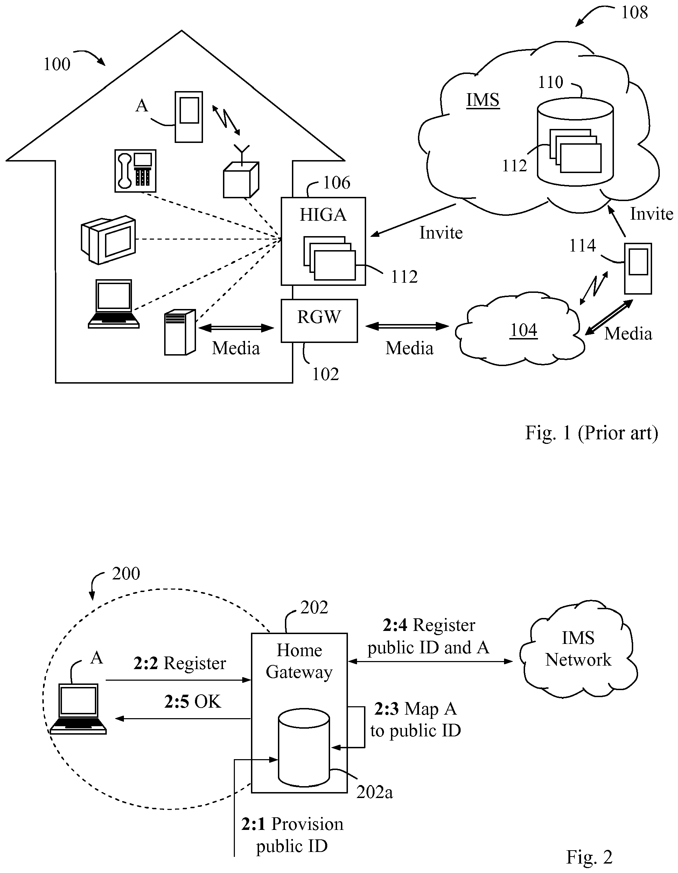

In Fig. 1, a local network 100 is shown with different local devices, in this example including a wireless telephone, a fixed telephone, a TV apparatus, a laptop computer, and a media server. The network 100 also includes a gateway 102 called RGW (Residential Gateway), which is connected to an external access network 104 to provide for media transport outside network 100 for the local devices. The local network 100 further includes a HIGA 106 providing a signalling connection to an IMS network 108. The HIGA 106 also has different internal interfaces towards the different devices in network 100, e.g. using device-specific protocols such as IEFT SIP.

When HIGA 106 receives a request for a multimedia service from a local device in network 100 using a device-specific interface/protocol, HIGA 106 translates the service request into a valid IMS request (typically a SIP INVITE message) to IMS network 108, to set up an IMS session on behalf of the local device using an IMS identity 112 associated with the device 100a. In a similar manner, HIGA 106 can also set up a media session with a local device when receiving a session request originating from an external device 114 outside the network 100. In either case, the media is transported over the RGW 102 and the access network 104 during the actual session, as indicated by two-way arrows.

It has also been proposed to use one or more shared IMS identities 112 in the HIGA which are allocated to the local devices on a session basis, i.e. the used IMS identity is released after the session is finished. Thereby, it is not necessary to maintain one dedicated IMS identity 112 for each local device both in the HIGA and in the IMS, which may involve a large number of IMS identities.

However, the local devices in the local network cannot be discerned in the IMS network if shared IMS identities are used, and the HIGA is therefore responsible for deciding which device(s) to alert upon incoming calls and session requests directed to such an IMS identity. Using shared IMS identities thus makes the local devices "anonymous" and indefinite to external entities and networks, unless a dedicated IMS identity is reserved for each local device, as described above.

In either case, the HIGA must be capable of handling incoming and outgoing calls and session requests to and from individual local devices which requires a certain complexity in the HIGA. This can sometimes be problematic since HIGA products that can be bought "off-the-shelf" from standard retailers are quite simple and may often lack the required functionality.

For example, the HIGA must be equipped with software capable of determining which local device(s) to connect for different incoming calls and session requests, e.g. depending on the called number and/or the type of communication and capabilities of the different devices in the local network. Some devices may be more suitable for certain types of sessions than other devices, and so forth.

This type of functionality would make the HIGA products more expensive, among other things. Moreover, a user must input an IMPU or the equivalent as a wanted public identity when making an IMS registration from a local device which may be perceived as an awkward or difficult task. The software in the HIGA may also need updating and/or error correction.

Document WO2007/069942 A1 discloses a multimedia gateway connected to a multimedia service network, for providing access to multimedia services for communication devices connected to a private network.

Document WO2008/074120 A1 discloses handling a request for a media-over-packet communication session.

Document WO2009/080398 A1 discloses controlling the LAN-attachable devices from a CP-terminal through an IMS network.

### SUMMARY

It is an object of the invention to basically address at least some of the problems outlined above. Further, it is an object to support registration of a local terminal with an external multimedia services network such as an IMS network, and to enable reduced complexity in the home gateway. These objects and others may be obtained by providing a method and arrangement according to the independent claims attached below.

According to one aspect, a method, according to independent claim 1, is provided in a home gateway of a local network for providing registration in an external multimedia services network for one or more local devices present in the local network. When a local registration request is received from a first local device, a mapping or association of a corresponding identification of the first local device to a first public identity which is valid in the multimedia services network, is stored. The first public identity is then registered together with the identification of the first local device in the multimedia services network for the first local device. Thereby, any incoming call or session request referring to the first public identity will be directed by the multimedia services network to the first local device.

According to another aspect, according to independent claim 8, is provided in a home gateway of a local network, the arrangement being capable of providing registration in an external multimedia services network for one or more local devices present in the local network. The home gateway arrangement comprises a receiving unit configured to receive a local registration request from a first local device, and a mapping unit configured to store a mapping or association of a corresponding identification of the first local device to a first public identity which is valid in the multimedia services network. The inventive home gateway arrangement further comprises a registration unit configured to register the first public identity together with the identification of the first local device in the multimedia services network for the first local device, such that any incoming call or session request referring to the first public identity will be directed by the multimedia services network to the first local device.

If the above method and/or home gateway arrangement is used, the home gateway can be made less complex since the functionality of selecting called device in the local network for incoming calls will be simpler as compared to the prior art. Different embodiments are defined in the dependent claims.

In one exemplary embodiment, whenever local registration requests are received from one or more further local devices in the local network, the first public identity is registered as a shared public identity together with each local device identification in the multimedia services network for each associated local device. Thereby, any incoming call or session request referring to the first public identity will be directed by the multimedia services network as separate calls or session requests to each associated local device.

According to another embodiment, when a local registration request indicating a wanted second public identity is received from a second local device, the second public identity is registered as an individual public identity together with the identification of the second local device in the multimedia services network for the second local device. Any incoming call or session request referring to the second public identity will then be directed by the multimedia services network only to the second local device.

According to yet another embodiment, when a local registration request indicating a wanted third public identity is received from a local device operated by a particular user, the third public identity is registered as an individual public identity together with the user identification in the multimedia services network for the user. Any incoming call or session request referring to the third public identity will then be directed by the multimedia services network only to a local device operated by that user.

In other possible embodiments, each registering operation may include sending an external registration request to the multimedia services network comprising one of the public identities and one of the identifications of local device(s) or user in a contact header of the external registration request. The public identities may be defined in the form of telephone numbers and/or e-mail addresses. Also, the stored mapping or association may used for determining which public identity to use for outgoing calls or session requests. For example, internal device-specific messages according to IEFT SIP may be used for communication with the local devices, and IMS compliant messages according to IMS SIP may be used for communication with the multimedia services network.

Further possible features and benefits of the invention will be explained in the detailed description below.

### BRIEF DESCRIPTION OF THE DRAWINGS

The invention will now be explained in more detail by means of exemplary embodiments and with reference to the accompanying drawings, in which:
- Fig. 1 is a network overview illustrating a local network with various different local devices and a home gateway using an IMS network for communicating with an external terminal, according to the prior art.
- Fig. 2 is a schematic block diagram illustrating a procedure for providing registration of a local device with an IMS network, in accordance with one possible embodiment.
- Fig. 3 is a flow chart illustrating a procedure executed by a home gateway of a local network for providing registration of a local device with a multimedia services network, in accordance with another embodiment.
- Fig. 4a, 4b and 4c are schematic block diagrams illustrating different traffic cases for incoming and outgoing calls, in accordance with further possible embodiments.
- Fig. 5 is a signalling diagram illustrating in more detail how the inventive solution can be implemented in practice, in accordance with further possible embodiments.
- Fig. 6 is a block diagram illustrating a home gateway in more detail, in accordance with further possible embodiments.

### DETAILED DESCRIPTION

Briefly described, the invention can be used for a device located within a local network to provide registration with a multimedia services network, which enables direction of incoming calls and session requests to appropriate specific devices in the local network but without requiring a dedicated public identity for each and every device. The home gateway may be a HIGA as specified in TISPAN and the multimedia services network may be an IMS network, although the invention is not limited specifically thereto.

When a local device is powered on or otherwise activated in a local network, it automatically sends a local registration request to the home gateway, which is a perfectly normal behaviour for any local device capable of connecting to a local network. In this solution, the home gateway has been configured, or "provisioned", with one or more public identities which are also valid in an external multimedia services network, e.g. an IMS network. The operation of configuring a node with various parameters is often generally referred to as "provisioning".

When receiving the local registration request from the local device, the home gateway stores a mapping or association of an identification of the local device to such a preconfigured public identity, and also registers that public identity along with the local device identification in the multimedia services network for the associated local device. Thereby, the multimedia services network will have knowledge of which local device to contact whenever an incoming call or session request referring to that public identity is received from a remote party, e.g. a telephone, computer or server. The functionality of determining which local device(s) to connect for different incoming calls and session requests is thus located in the multimedia services network, e.g. as handled by a suitable session control node therein, and the home gateway can be made relatively simple and reasonably priced.

An example of how the above registration can be executed will now be described with reference to a communication scenario shown in Fig. 2. In this example, the multimedia services network is represented by an IMS network, although the invention is not generally limited to using IMS networks. A local network 200 comprises a plurality of local devices, including a computer device A, and a home gateway 202 which may be the above-described HIGA node or any other gateway node with the functionality described below. It is further assumed that the home gateway 202 is a subscriber with the IMS network, e.g. by means of an IMPI as described above.

A first **step 2:1** illustrates that the home gateway is configured or provisioned with one or more public identities which are also valid in an external multimedia services network, e.g. an IMS network. The public identities may be IMPU:s designed as e-mail addresses or telephone numbers and has been configured in the IMS network as well along with an IMPI or similar when establishing a subscription for the home gateway with the IMS network.

In a next **step 2:2**, the local device A sends a local registration request to the home gateway 202, e.g. when being powered on or otherwise activated, which is a standard operation when such devices establish a connection in local networks. The home gateway 202 is also able to determine an identification of local device A, e.g. from the received registration request or by means of the internal communication interface used. Typically, the registration request is a SIP REGISTER message containing an identification of the sending device A such as a local source IP address and/or a device identity known to the home gateway 202.

In a further **step 2:3**, the home gateway 202 stores a mapping or association of an identification of the first local device to one of the public identities preconfigured in the previous step 2:1. This mapping or association may be stored in a local database 202a or the equivalent. Next, the home gateway 202 executes registration, in a **step 2:4**, of the above selected public identity together with an associated identification of device A in the IMS network, such that local device A is associated to the public identity, e.g. an IMPU, in the IMS network as well.

It should be noted that the identification of device A used in the registration of step 2:4 and/or mapping of step 2:3 could be any type of device identification, thus not necessarily using the one present in the local registration request of step 2:2. For example, a simple naming or the like may be used to indicate device A in the IMS network and/or the mapping above, for instance merely the letter "A". In another example, the identification of A may contain both its local IP address and some unique ID code. In a practical example, the contact field in the header of a SIP REGISTER message could be:
"Contact: IMPU_Unique_localID@WAN_IP_adress:5060"

The shown procedure may be finished by a suitable acknowledge message "OK" from home gateway 202 to device A, in a **step 2:5**, which can alternatively be executed at any time after step 2:2. Thereby, any incoming call or session request referring to the public identity registered in step 2:4 will be directed by the IMS network to the associated local device A.

The home gateway 202 may likewise receive local registration requests from one or more further local devices in network 200, not shown in this figure, e.g. when they are powered on or otherwise activated, as part of the normal local connection procedure. Then, a mapping or association of a corresponding local device identification to the same public identity can be stored for each device, and the public identity can be registered as a shared public identity together with each local device identification in the IMS network for each additional local device.

Thereby, any incoming call or session request referring to the registered public identity will be directed by the IMS network to each of the associated local devices. Effectively, all these devices will be called and alerted, e.g. ringing, since the incoming call or session request will be directed by the IMS network to each and every associated device. This functionality is often referred to as "forking", i.e. the incoming call or session request is branched out into plural separate calls by the IMS network, which will be described further below. In particular, the registered public identity may be used as a common "home" public identity that is shared by multiple devices in the local network, in the sense that any incoming call or session request referring to the registered public identity will be directed by the IMS network to all associated local devices.

However, if a local registration request from a local device indicates a wanted public identity that is to be used exclusively for the requesting local device or its current user, the home gateway stores a mapping or association of a corresponding identification of the local device or user to the indicated public identity. That public identity is then registered as an individual public identity together with the corresponding local device or user identification in the IMS network. Thereby, any incoming call or session request referring to the individual public identity will be directed by the IMS network only to the associated local device or user, i.e. no forking in this case.

The home gateway 202 may be configured to automatically map or associate all registering local devices to the shared home public identity which make local registration requests not specifying any wanted individual public identity. In this way, a mixture of individual and shared public identities can be used in the local network and the functionality of determining which local device(s) to call based on a called public identity, using forking or not, will be located in the IMS network instead of the home gateway. As mentioned above, locating the forking functionality in the IMS network instead of the home gateway enables simpler and less costly home gateways, among other things.

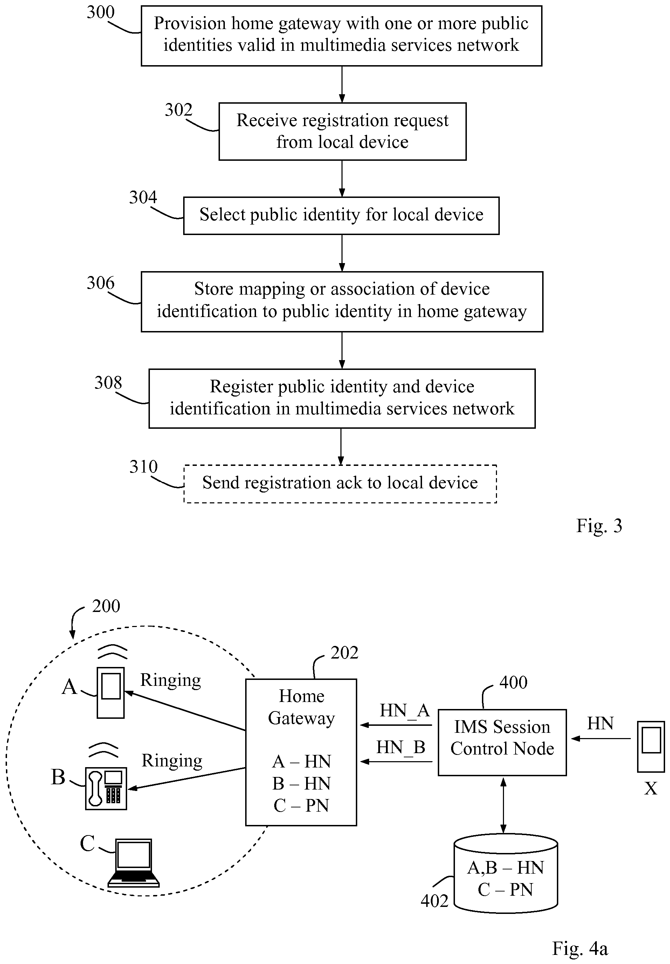

An exemplary procedure for providing registration of a local device with a multimedia services network, will now be described with reference to the flow chart in Fig. 3. This procedure is executed by a home gateway of a local network, e.g. the home gateway 202 in Fig. 2, which has been established as a subscriber with the multimedia services network.

In a first **step 300**, the home gateway is configured or provisioned with one or more public identities valid in the multimedia services network, e.g. IMPU:s, which corresponds basically to step 2:1 above. In a next **step 302**, the home gateway receives a local registration request from a local device in the network, which corresponds basically to step 2:2 above. Then, one of the above configured public identities, e.g. an IMPU, is determined and selected for the requesting local device, in a following **step 304**.

As mentioned above, a shared public identity may be selected "by default" for local registration requests not specifying a wanted individual public identity. However, this solution does not exclude the possibility of registering individual public identities as well, e.g. as dictated by manual input in the used device. Alternatively, a local device may be preconfigured to include a certain individual public identity automatically in the local registration request for either belonging exclusively to the device or to the current user.

In a next **step 306**, a mapping or association of an identification of the local device to the public identity selected in step 304, is stored in the home gateway, which corresponds basically to step 2:3 above. The public identity, e.g. IMPU, is then registered together with a suitable device identification in the multimedia services network, as shown by a further **step 308**, which corresponds basically to step 2:4 above. Thereby, an association between the public identity and the local device is effectively created in the multimedia services network as well. A suitable registration acknowledge message may also be sent to the local device, e.g. depending on the local device-specific protocol used, as shown by an optional final **step 310.** Analogous to the example of Fig. 2, step 310 can basically be executed at any time after step 302.

Fig's 2 and 3 have outlined a procedure for creating a registration in the multimedia services network of a public identity for a local device, such that any incoming call or session request will be directed specifically to that device by the multimedia services network. Some exemplary traffic cases for incoming and outgoing calls will now be briefly described with reference to Fig's 4a-c, respectively.

Reusing some of the numerals in Fig. 2, Fig's 4a-c all illustrate a local network 200 in which local devices A, B and C are present, and also having a home gateway 202 which is a subscriber in an IMS network. An IMS session control node 400 in the IMS network is used for controlling calls and sessions to and from the home gateway 202 in the manner described below.

Furthermore, devices A and B have both been registered in the manner described for Fig's 2 and 3 above such that devices A and B are both associated to a shared public identity, e.g. IMPU, denoted "HN" (Home Number), whereas device C has been registered such that device C or its current user is exclusively associated to an individual public identity, e.g. IMPU, denoted "PN" (Personal Number). The mapping of A, B and C to HN and PN, respectively, is stored in the home gateway 202, as shown in the figures. In a database 402 of the IMS network, identifications of devices A and B have also been registered together with the shared public identity HN while an identification of device C or its current user has been registered together with the individual public identity PN. Again, the registered identifications of devices A, B and C could be any type of device identifications, thus not necessarily those used locally by the devices themselves when communicating with the home gateway.

In the traffic case of Fig. 4a, IMS node 400 receives an incoming call from a remote party X with HN as the called number. IMS node then checks database 402 and finds out that the incoming call should be directed to devices A and B, as they are both registered together with the called number HN. Two separate incoming calls are then created in a forking operation at IMS node 400 having a called number of HN_A and HN_B, respectively, which are both sent to home gateway 202. Thus, IMS node 400 modifies the called number of the incoming call by adding the previously registered identifications of device A and B, respectively, to the received called number HN. As a result, both calls are received by home gateway 202 which are translated into device-specific call alerts such that both devices A and B will be ringing.

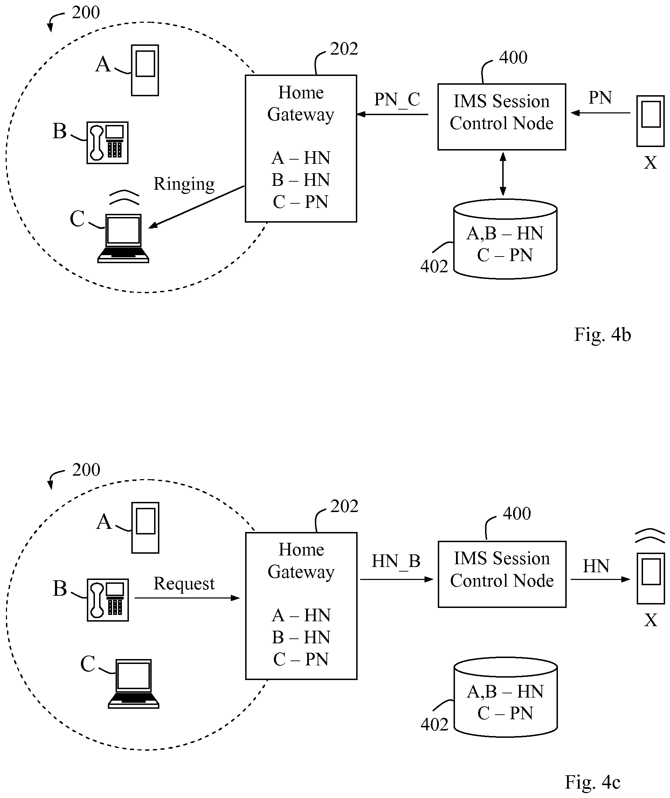

In the traffic case of Fig. 4b, IMS node 400 receives an incoming call from a remote party X with PN as the called number. IMS node then checks database 402 and finds out that the incoming call should be directed to device C, which accordingly has been registered together with the called number PN, e.g. depending on its current user. In this case, no forking operation is made at IMS node 400. Thus, IMS node 400 modifies the called number of the incoming call by adding the previously registered identification of device C to the received called number HN. As a result, the singular call is received by home gateway 202 which is translated into a device-specific call alert such that only device C will be ringing.

In the traffic case of Fig. 4c, home gateway 202 receives an outgoing call request from the local device B which is directed to the remote party X. The received outgoing call is a device-specific call request that may or may not have an identity or local IP address of device B as a calling number, depending on the device type used. Home gateway 202 then identifies the calling device and checks its local mappings and finds out that the outgoing call to X should use an external calling number of HN and the previously registered identification of device B, according to the locally stored mapping or association of B to HN.

Thus, home gateway 202 creates an external calling number for the outgoing call by adding the public identity HN valid for device B to the previously registered identification of device B, i.e. HN_B. For example, if SIP is used for the outgoing call, a SIP header may contain parameters such as "From: HN, Contact: HN_B". As a result, the call coming from HN_B is received by IMS node 400 which then simply removes the identification of device B such that remote party X will receive a call with HN as the calling number.

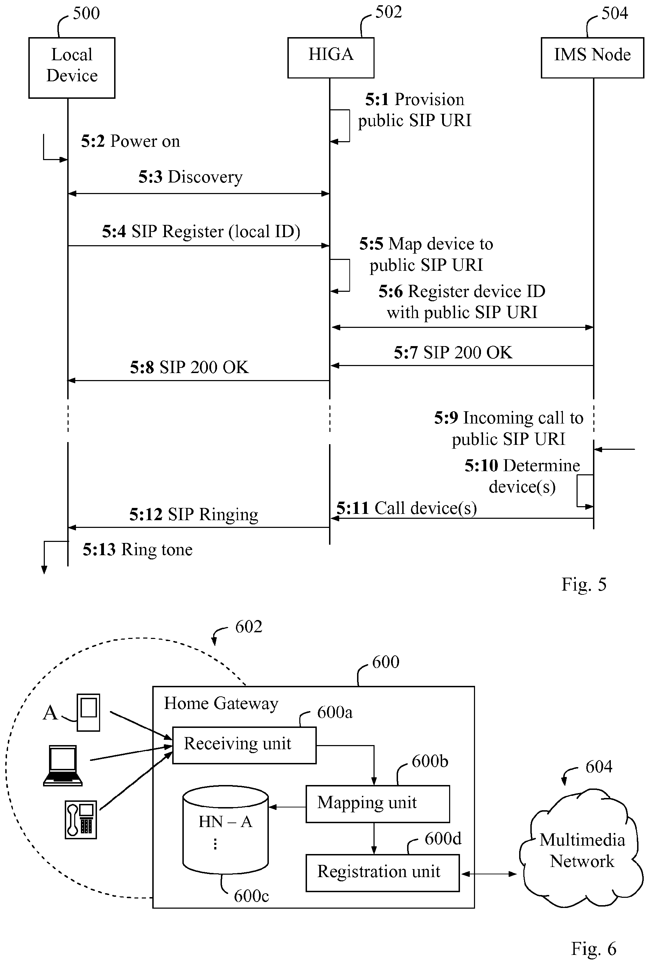

An example of how the inventive solution can be implemented in practice will now be described in more detail with reference to the signalling diagram in Fig. 5. In this example, a local device 500 in a local network is first registered in a IMS network by means of a HIGA 502 in the local network and an IMS node 52 in the IMS network, and device 500 then receives an incoming call from a remote party, not shown.

A first **step 5:1** illustrates that a public SIP URI is provisioned or configured as a public identity or IMPU in the HIGA 502, basically corresponding to steps 2:1 and 300 above. In a next **step 5:2**, device 500 is powered on which triggers a discovery process in a following **step 5:3** which is normally conducted when connecting to the local network. The discovery process per se is generally known to any person skilled in the art and is not necessary to describe further to understand this implementation example.

In a next **step 5:4**, device 500 sends a local registration request to HIGA 502, in this example a SIP REGISTER message which may or may not include a local identity of device 500, basically corresponding to steps 2:2 and 302 above. After deciding that device 500 can use the provisioned public SIP URI as public identity, the HIGA 502 then stores a mapping or association of an identification of device 500 to the public SIP URI, in a following **step 5:5**. This step basically corresponds to steps 2:3 and 306 above.

A further **step 5:6** illustrates the operation of registering the public SIP URI together with an identification of device 500 in the IMS node 504, basically corresponding to steps 2:4 and 308 above. This operation is finished by IMS node 504 sending a SIP 200 OK message in acknowledgement to the HIGA 502, in a next **step 5:7**. The HIGA 502 may also send a corresponding SIP 200 OK message or similar depending on the local device type, in acknowledgement to the device 500, in another shown **step 5:8.** Thereby, registration of device 500 with the IMS network is completed.

A further **step 5:9** illustrates that an incoming call from a remote party is eventually received by the IMS node 504, the call being directed to the public SIP URI as a "called number" or the equivalent. In a next **step 5:10**, IMS node 504 determines which device or devices to send the call to, based on the registration made in step 5:6 and any other registrations possibly made in the same manner for further local devices in the local network, if any. Accordingly, IMS node 504 finds out that device 500 is associated to the called public SIP URI and modifies the called number by including the previously registered identification of device 500 with the public SIP URI. The call is forwarded to the HIGA 502 in a next step 5:11, and further calls may be forwarded as well with other local device identifications if further devices are associated to the called public SIP URI, as described above as the forking operation.

HIGA 502 then recognises device 500 from the called number of the incoming call and translates the incoming call into a device-specific call alert in the form of a SIP RINGING message in **step 5:12**, such that device 500 will be ringing in a final **step 5.13**. If further calls are received with other local device identifications originating from the same remote party, these further local devices will be alerted as well. However, the HIGA will perceive and process these calls as separate calls independent of each other.

An arrangement in a home gateway will now be described in more detail with reference to the block diagram in Fig. 6. The home gateway 600 is serving a local network 602 with a plurality of local devices, and has also been established as subscriber with a multimedia services network 604, e.g. an IMS network. The home gateway 600 may further be a HIGA.

The home gateway 600 is configured for providing registration in an external multimedia services network 604 for local devices present in the local network, basically in the manner described above. The home gateway 600 comprises a receiving unit 600a configured to receive a local registration request from a first local device A, and a mapping unit 600b configured to store 600c a mapping of a corresponding identification of the associated first local device A to a first public identity HN which is valid in the multimedia services network 604. This mapping is stored in a suitable database 600c.

The home gateway 600 further comprises a registration unit 600d configured to register the first public identity HN together with an identification of device A in the multimedia services network for the associated first local device. Thereby, any incoming call or session request referring to the first public identity will be directed by the multimedia services network 604 to the associated first local device A.

The home gateway arrangement in Fig. 6 may also be configured to handle different traffic cases according to further embodiments as follows. For example, whenever local registration requests are received from one or more further local devices in the local network, the mapping unit 600b may be configured to store a mapping or association of a corresponding identification of each local device to the first public identity. The registration unit 600d is then also configured to register the first public identity as a shared public identity together with each local device identification in the multimedia services network for each of the further associated local device(s). Thereby, any incoming call or session request referring to the first public identity will be directed by the multimedia services network as separate calls or session requests to each of the associated first and further local device(s).

In another example, when a local registration request indicating a wanted second public identity is received from a second local device, the mapping unit 600b may be further configured to store a mapping or association of a corresponding identification of the second local device to the second public identity. The registration unit 600d is then also configured to register the second public identity as an individual public identity together with the identification of the second local device in the multimedia services network for the associated second local device. Thereby, any incoming call or session request referring to the second public identity will be directed by the multimedia services network only to the associated second local device.

In yet another example, when a local registration request indicating a wanted third public identity is received from a local device operated by a particular user, the mapping unit 600b may be configured to store a mapping or association of a corresponding user identification to the third public identity. The registration unit is then also configured to register the third public identity as an individual public identity together with the user identification in the multimedia services network for the associated user. Thereby, any incoming call or session request referring to the third public identity will be directed by the multimedia services network only to a local device operated by the associated user.

According to another embodiment, the registration unit is further configured to send, in each registering operation, an external registration request to the multimedia services network comprising one of the public identities and one of the identifications of local device(s) or user in a contact header of the external registration request.

While the invention has been described with reference to specific exemplary embodiments, the description is only intended to illustrate the inventive concept and should not be taken as limiting the invention. Although the concepts of HIGA, IMS and SIP have been used when describing the above embodiments, any other similar suitable standards, protocols and network elements may basically be used for providing registration of a local device in a multimedia services network as described herein. The scope of the invention is only defined by the following claims.

## Claims

1. A method in a home gateway (202,502,600) of a local network (200,602) for providing registration in an external multimedia services network (IMS,604) for one or more local devices (A,B,C) present in the local network, comprising the following steps:
- receiving (302) a local registration request from a first local device (A),
- storing (306) a mapping or association of a corresponding local device identification of the first local device to a first public identity which is valid in the multimedia services network, and
- registering (308) the first public identity together with said local device identification of the first local device in the multimedia services network for the first local device,
wherein any incoming call or session request referring to the first public identity, received from the multimedia services network, will be directed by the home gateway to the first local device,
wherein whenever local registration requests are received from one or more further local devices (B) in the local network,
- storing a mapping or association of a corresponding local device identification of each of said further local devices to the first public identity
- registering the first public identity as a shared public identity (HN) together with each local device identification in the multimedia services network for each of said further local devices, therefore enabling any incoming call or session request referring to the first public identity to be received from the multimedia services network as separate calls or session requests to each of said first and further local devices.

2. A method according to claim 1, wherein when a local registration request indicating a wanted second public identity is received from a second local device in the local network, a mapping or association of a corresponding local device identification of the second local device to the second public identity is stored and the second public identity is registered as an individual public identity (PN) together with said local device identification of the second local device in the multimedia services network for the second local device, therefore enabling any incoming call or session request referring to the second public identity received from the multimedia services network to be directed only to the second local device.

3. A method according to any of claims 1-2, wherein when a local registration request indicating a wanted third public identity is received from a local device operated by a particular user in the local network, a mapping or association of a corresponding user identification to the third public identity is stored and the third public identity is registered as an individual public identity (PN) together with said user identification in the multimedia services network for said user, therefore enabling any incoming call or session request referring to the third public identity received from the multimedia services network to be directed only to a local device operated by said user.

4. A method according to any of claims 1-3, wherein each registering operation includes sending an external registration request to the multimedia services network comprising one of said public identities and one of said local device identifications of local devices or user identification in a contact header of the external registration request.

5. A method according to any of claims 1-4, wherein the public identities are defined in the form of telephone numbers and/or e-mail addresses.

6. A method according to any of claims 1-5, wherein the stored mapping or association is used for determining which public identity to use for outgoing calls or session requests.

7. A method according to any of claims 1-6, wherein internal device-specific messages according to IEFT session initiation protocol, SIP, are used for communication with the local devices, and Internet Protocol, IP, Multimedia Subsystem, IMS, compliant messages according to IMS SIP are used for communication with the multimedia services network.

8. An arrangement in a home gateway (600) of a local network (602) configured for providing registration in an external multimedia services network (604) for one or more local devices present in the local network, comprising:
- a receiving unit (600a) configured to receive a local registration request from a first local device (A),
- a mapping unit (600b) configured to store (600c) a mapping or association of a corresponding local device identification of the first local device to a first public identity which is valid in the multimedia services network, and
- a registration unit (600d) configured to register the first public identity together with said local device identification of the first local device in the multimedia services network for the first local device,
wherein the home gateway is configured to direct any incoming call or session request received from the multimedia services network and referring to the first public identity to the first local device, wherein whenever local registration requests are received from one or more further local devices (B) in the local network, the mapping unit is further configured to store a mapping or association of a corresponding local device identification of each of said further local devices to the first public identity, and the registration unit is further configured to register the first public identity as a shared public identity together with each local device identification in the multimedia services network for each of said further local devices, and wherein the home gateway is further configured to receive any incoming call or session request referring to the first public identity from the multimedia services network as separate calls or session requests directed to each of said first and further local devices.

9. An arrangement according to claim 8, when a local registration request indicating a wanted second public identity is received from a second local device in the local network, the mapping unit is further configured to store a mapping or association of a corresponding local device identification of the second local device to the second public identity, and the registration unit is further configured to register the second public identity as an individual public identity together with said identification of the second local device in the multimedia services network for the second local device, wherein the home gateway is configured to direct any incoming call or session request received from the multimedia services network and referring to the second public identity only to the second local device.

10. An arrangement according to claim 9, wherein when a local registration request indicating a wanted third public identity is received from a local device operated by a particular user in the local network, the mapping unit is further configured to store a mapping or association of a corresponding user identification to the third public identity, and the registration unit is further configured to register the third public identity as an individual public identity together with said user identification in the multimedia services network for said user, wherein the gateway is configured to direct any incoming call or session request received from the multimedia services network and referring to the third public identity only to a local device operated by said user.

11. An arrangement according to any of claims 9-10, wherein the registration unit is further configured to send, in each registering operation, an external registration request to the multimedia services network comprising one of said public identities and one of said local device identifications of local devices or user identification in a contact header of the external registration request.

12. An arrangement according to any of claims 9-11, wherein the public identities are defined in the form of telephone numbers and/or e-mail addresses.

13. An arrangement according to any of claims 9-12, adapted to use the stored mapping or association for determining which public identity to use for outgoing calls or session requests.

14. An arrangement according to any of claims 9-13, adapted to use internal device-specific messages according to IEFT session initiation protocol, SIP, for communication with the local devices, and to use Internet Protocol, IP, Multimedia Subsystem, IMS, compliant messages according to IMS SIP for communication with the multimedia services network.

## Patentansprüche

1. Verfahren in einem Home-Gateway (202,502,600) eines lokalen Netzwerks (200,602) zum Bereitstellen einer Registrierung in einem externen Multimedia-Dienste-Netzwerk (IMS, 604) für eine oder mehrere lokale Vorrichtungen (A, B, C), die in dem lokalen Netzwerk vorhanden sind, umfassend die folgenden Schritte:
- Empfangen (302) einer lokalen Registrierungsanforderung von einer ersten lokalen Vorrichtung (A),
- Speichern (306) einer Zuordnung oder Verbindung einer entsprechenden Identifikation einer lokalen Vorrichtung der ersten lokalen Vorrichtung zu bzw. mit einer ersten öffentlichen Identität, die in dem Multimedia-Dienste-Netzwerk gültig ist, und
- Registrieren (308) der ersten öffentlichen Identität zusammen mit der Identifikation einer lokalen Vorrichtung der ersten lokalen Vorrichtung in dem Multimedia-Dienste-Netzwerk für die erste lokale Vorrichtung,
wobei jeder eingehende Anruf oder jede Sitzungsanforderung in Bezug auf die erste öffentliche Identität, der bzw. die von dem Multimedia-Dienste-Netzwerk empfangen wird, durch das Home-Gateway zu der ersten lokalen Vorrichtung geleitet wird,
wobei jedes Mal, wenn lokale Registrierungsanforderungen von einer oder mehreren weiteren lokalen Vorrichtungen (B) in dem lokalen Netzwerk empfangen werden,
- Speichern einer Zuordnung oder Verbindung einer entsprechenden Identifikation einer lokalen Vorrichtung von jeder der weiteren lokalen Vorrichtungen zu bzw. mit der ersten öffentlichen Identität,
- Registrieren der ersten öffentlichen Identität als eine gemeinsame öffentliche Identität (HN) zusammen mit jeder Identifikation einer lokalen Vorrichtung in dem Multimedia-Dienste-Netzwerk für jede der weiteren lokalen Vorrichtungen, wodurch es ermöglicht wird, dass alle eingehenden Anrufe oder Sitzungsanforderungen in Bezug auf die erste öffentliche Identität von dem Multimedia-Dienste-Netzwerk als separate Anrufe oder Sitzungsanforderungen an jede der ersten und weiteren lokalen Vorrichtungen empfangen werden.

2. Verfahren nach Anspruch 1, wobei, wenn eine lokale Registrierungsanforderung, die eine gewünschte zweite öffentliche Identität angibt, von einer zweiten lokalen Vorrichtung in dem lokalen Netzwerk empfangen wird, eine Zuordnung oder Verbindung einer entsprechenden Identifikation einer lokalen Vorrichtung der zweiten lokalen Vorrichtung zu bzw. mit der zweiten öffentlichen Identität gespeichert wird und die zweite öffentliche Identität als eine einzelne öffentliche Identität (PN) zusammen mit der Identifikation einer lokalen Vorrichtung der zweiten lokalen Vorrichtung in dem Multimedia-Dienste-Netzwerk für die zweite lokale Vorrichtung registriert wird, wodurch es ermöglicht wird, dass alle eingehenden Anrufe oder Sitzungsanforderungen in Bezug auf die zweite öffentliche Identität, die von dem Multimedia-Dienste-Netzwerk empfangen werden, nur zu der zweiten lokalen Vorrichtung geleitet werden.

3. Verfahren nach einem der Ansprüche 1 bis 2, wobei, wenn eine lokale Registrierungsanforderung, die eine gewünschte dritte öffentliche Identität angibt, von einer lokalen Vorrichtung, die durch einen bestimmten Benutzer in dem lokalen Netzwerk betrieben wird, empfangen wird, eine Zuordnung oder Verbindung einer entsprechenden Benutzeridentifikation zu bzw. mit der dritten öffentlichen Identität gespeichert wird und die dritte öffentliche Identität als eine einzelne öffentliche Identität (PN) zusammen mit der Benutzeridentifikation in dem Multimedia-Dienste-Netzwerk für den Benutzer registriert wird, wodurch es ermöglicht wird, dass alle eingehenden Anrufe oder Sitzungsanforderungen in Bezug auf die dritte öffentliche Identität, die von dem Multimedia-Dienste-Netzwerk empfangen werden, nur zu einer lokalen Vorrichtung, die durch den Benutzer betrieben wird, geleitet werden.

4. Verfahren nach einem der Ansprüche 1 bis 3, wobei jeder Registrierungsvorgang ein Senden einer externen Registrierungsanforderung, die eine der öffentlichen Identitäten und eine der Identifikationen einer lokalen Vorrichtung von lokalen Vorrichtungen oder eine Benutzeridentifikation in einem Kontakt-Header der externen Registrierungsanforderung umfasst, zu dem Multimedia-Dienste-Netzwerk umfasst.

5. Verfahren nach einem der Ansprüche 1 bis 4, wobei die öffentlichen Identitäten in Form von Telefonnummern und/oder E-Mail-Adressen definiert sind.

6. Verfahren nach einem der Ansprüche 1 bis 5, wobei die gespeicherte Zuordnung oder Verbindung verwendet wird, um zu bestimmen, welche öffentliche Identität für ausgehende Anrufe oder Sitzungsanforderungen verwendet werden soll.

7. Verfahren nach einem der Ansprüche 1 bis 6, wobei interne vorrichtungsspezifische Nachrichten gemäß dem IEFT-Sitzungsaufbauprotokoll (Session Initiation Protocol, SIP) zur Kommunikation mit den lokalen Vorrichtungen verwendet werden und mit dem Internet Protocol (IP) Multimedia Subsystem (IMS) kompatible Nachrichten gemäß IMS SIP zur Kommunikation mit dem Multimedia-Dienste-Netzwerk verwendet werden.

8. Anordnung in einem Home-Gateway (600) eines lokalen Netzwerks (602), die zum Bereitstellen einer Registrierung in einem externen Multimedia-Dienste-Netzwerk (604) für eine oder mehrere lokale Vorrichtungen, die in dem lokalen Netzwerk vorhanden sind, konfiguriert ist, umfassend:
- eine Empfangseinheit (600a), die zum Empfangen einer lokalen Registrierungsanforderung von einer ersten lokalen Vorrichtung (A) konfiguriert ist,
- eine Zuordnungseinheit (600b), die zum Speichern (600c) einer Zuordnung oder Verbindung einer entsprechenden Identifikation einer lokalen Vorrichtung der ersten lokalen Vorrichtung zu bzw. mit einer ersten öffentlichen Identität, die in dem Multimedia-Dienste-Netzwerk gültig ist, konfiguriert ist, und
- eine Registriereinheit (600d), die zum Registrieren der ersten öffentlichen Identität zusammen mit der Identifikation einer lokalen Vorrichtung der ersten lokalen Vorrichtung in dem Multimedia-Dienste-Netzwerk für die erste lokale Vorrichtung konfiguriert ist,
wobei das Home-Gateway zum Leiten von eingehenden Anrufen oder Sitzungsanforderungen, die von dem Multimedia-Dienste-Netzwerk empfangen werden und sich auf die erste öffentliche Identität beziehen, zu der ersten lokalen Vorrichtung konfiguriert ist,
wobei, jedes Mal, wenn lokale Registrierungsanforderungen von einer oder mehreren weiteren lokalen Vorrichtungen (B) in dem lokalen Netzwerk empfangen werden, die Zuordnungseinheit ferner zum Speichern einer Zuordnung oder Verbindung einer entsprechenden Identifikation einer lokalen Vorrichtung von jeder der weiteren lokalen Vorrichtungen zu bzw. mit der ersten öffentlichen Identität konfiguriert ist und die Registrierungseinheit ferner zum Registrieren der ersten öffentlichen Identität als eine gemeinsame öffentliche Identität zusammen mit jeder Identifikation einer lokalen Vorrichtung in dem Multimedia-Dienste-Netzwerk für jede der weiteren lokalen Vorrichtungen konfiguriert ist, und wobei das Home-Gateway ferner zum Empfangen von eingehenden Anrufen oder Sitzungsanforderungen in Bezug auf die erste öffentliche Identität von dem Multimedia-Dienste-Netzwerk als separate Anrufe oder Sitzungsanforderungen, die zu jeder der ersten und weiteren lokalen Vorrichtungen geleitet werden, konfiguriert ist.

9. Anordnung nach Anspruch 8, wenn eine lokale Registrierungsanforderung, die eine gewünschte zweite öffentliche Identität angibt, von einer zweiten lokalen Vorrichtung in dem lokalen Netzwerk empfangen wird, die Zuordnungseinheit ferner zum Speichern einer Zuordnung oder Verbindung einer entsprechenden Identifikation einer lokalen Vorrichtung der zweiten lokalen Vorrichtung zu bzw. mit der zweiten öffentlichen Identität konfiguriert ist und die Registrierungseinheit ferner zum Registrieren der zweiten öffentlichen Identität als eine einzelne öffentliche Identität zusammen mit der Identifikation der zweiten lokalen Vorrichtung in dem Multimedia-Dienste-Netzwerk für die zweite lokale Vorrichtung konfiguriert ist, wobei das Home-Gateway zum Leiten von eingehenden Anrufen oder Sitzungsanforderungen, die von dem Multimedia-Dienste-Netzwerk empfangen werden und sich auf die zweite öffentliche Identität beziehen, nur zu der zweiten lokalen Vorrichtung konfiguriert ist.

10. Anordnung nach Anspruch 9, wobei, wenn eine lokale Registrierungsanforderung, die eine gewünschte dritte öffentliche Identität angibt, von einer lokalen Vorrichtung, die durch einen bestimmten Benutzer in dem lokalen Netzwerk betrieben wird, empfangen wird, die Zuordnungseinheit ferner zum Speichern einer Zuordnung oder Verbindung einer entsprechenden Benutzeridentifikation zu bzw. mit der dritten öffentlichen Identität konfiguriert ist und die Registrierungseinheit ferner zum Registrieren der dritten öffentlichen Identität als eine einzelne öffentliche Identität zusammen mit der Benutzeridentifikation in dem Multimedia-Dienste-Netzwerk für den Benutzer konfiguriert ist, wobei das Gateway zum Leiten von eingehenden Anrufen oder Sitzungsanforderungen, die von dem Multimedia-Dienste-Netzwerk empfangen werden und sich auf die dritte öffentliche Identität beziehen, nur zu einer lokalen Vorrichtung, die durch den Benutzer betrieben wird, konfiguriert ist.

11. Anordnung nach einem der Ansprüche 9 bis 10, wobei die Registrierungseinheit ferner zum Senden, in jedem Registrierungsvorgang, einer externen Registrierungsanforderung, die eine der öffentlichen Identitäten und eine der Identifikationen einer lokalen Vorrichtung von lokalen Vorrichtungen oder eine Benutzeridentifikation in einem Kontakt-Header der externen Registrierungsanforderung umfasst, zu dem Multimedia-Dienste-Netzwerk konfiguriert ist.

12. Anordnung nach einem der Ansprüche 9 bis 11, wobei die öffentlichen Identitäten in Form von Telefonnummern und/oder E-Mail-Adressen definiert sind.

13. Anordnung nach einem der Ansprüche 9 bis 12, die dazu konzipiert ist, die gespeicherte Zuordnung oder Verbindung zu verwenden, um zu bestimmen, welche öffentliche Identität für ausgehende Anrufe oder Sitzungsanforderungen verwendet werden soll.

14. Anordnung nach einem der Ansprüche 9 bis 13, die dazu konzipiert ist, interne vorrichtungsspezifische Nachrichten gemäß dem IEFT-Sitzungsaufbauprotokoll (Session Initiation Protocol, SIP) zur Kommunikation mit den lokalen Vorrichtungen zu verwenden und mit dem Internet Protocol (IP) Multimedia Subsystem (IMS) kompatible Nachrichten gemäß IMS SIP zur Kommunikation mit dem Multimedia-Dienste-Netzwerk zu verwenden.

## Revendications

1. Procédé mis en oeuvre dans une passerelle domestique (202, 502, 600) d'un réseau local (200, 602) pour fournir un enregistrement dans un réseau de services multimédias externe (IMS, 604) pour un ou plusieurs dispositifs locaux (A, B, C) présents dans le réseau local, comprenant les étapes ci-dessous consistant à :
- recevoir (302) une demande d'enregistrement local en provenance d'un premier dispositif local (A) ;
- stocker (306) une mise en correspondance ou une association d'une identification de dispositif local correspondante du premier dispositif local à une première identité publique qui est valide dans le réseau de services multimédias ; et
- enregistrer (308) la première identité publique conjointement avec ladite identification de dispositif local du premier dispositif local dans le réseau de services multimédias pour le premier dispositif local ;
dans lequel tout appel entrant ou toute demande de session entrante se référant à la première identité publique, reçu(e) en provenance du réseau de services multimédias, sera dirigé(e) par la passerelle domestique vers le premier dispositif local ;
dans lequel, à chaque fois que des demandes d'enregistrement local sont reçues en provenance d'un ou plusieurs dispositifs locaux supplémentaires (B) dans le réseau local, le procédé comprend les étapes ci-dessous consistant à :
- stocker une mise en correspondance ou une association d'une identification de dispositif local correspondante de chacun desdits dispositifs locaux supplémentaires à la première identité publique ;
- enregistrer la première identité publique en tant qu'une identité publique partagée (HN) conjointement avec chaque identification de dispositif local dans le réseau de services multimédias pour chacun desdits dispositifs locaux supplémentaires, ce qui permet par conséquent à tout appel entrant ou toute demande de session entrante se référant à la première identité publique d'être reçu(e) en provenance du réseau de services multimédias sous la forme d'appels individuels ou de demandes de session individuelles sur chacun parmi ledit premier dispositif local et lesdits dispositifs locaux supplémentaires.

2. Procédé selon la revendication 1, dans lequel, lorsqu'une demande d'enregistrement local indiquant une deuxième identité publique souhaitée est reçue en provenance d'un second dispositif local dans le réseau local, une mise en correspondance ou une association d'une identification de dispositif local correspondante du second dispositif local à la deuxième identité publique est stockée, et la deuxième identité publique est enregistrée en tant qu'une identité publique individuelle (PN) conjointement avec ladite identification de dispositif local du second dispositif local dans le réseau de services multimédias pour le second dispositif local, ce qui permet par conséquent à tout appel entrant ou toute demande de session entrante se référant à la deuxième identité publique reçu(e) en provenance du réseau de services multimédias d'être dirigé(e) uniquement vers le second dispositif local.

3. Procédé selon l'une quelconque des revendications 1 à 2, dans lequel, lorsqu'une demande d'enregistrement local indiquant une troisième identité publique souhaitée est reçue en provenance d'un dispositif local exploité par un utilisateur particulier dans le réseau local, une mise en correspondance ou une association d'une identification d'utilisateur correspondante à la troisième identité publique est stockée, et la troisième identité publique est enregistrée en tant qu'une identité publique individuelle (PN) conjointement avec ladite identification d'utilisateur dans le réseau de services multimédias pour ledit utilisateur, ce qui permet par conséquent à tout appel entrant ou toute demande de session entrante se référant à la troisième identité publique, reçu(e) en provenance du réseau de services multimédias, d'être dirigé(e) uniquement vers un dispositif local exploité par ledit utilisateur.

4. Procédé selon l'une quelconque des revendications 1 à 3, dans lequel chaque opération d'enregistrement inclut l'envoi d'une demande d'enregistrement externe au réseau de services multimédias comprenant l'une desdites identités publiques et l'une desdites identifications de dispositifs locaux de dispositifs locaux ou d'identification d'utilisateur dans un en-tête de contact de la demande d'enregistrement externe.

5. Procédé selon l'une quelconque des revendications 1 à 4, dans lequel les identités publiques sont définies sous la forme de numéros de téléphone et/ou d'adresses électroniques.

6. Procédé selon l'une quelconque des revendications 1 à 5, dans lequel la mise en correspondance ou l'association stockée est utilisée en vue de déterminer quelle identité publique utiliser pour des appels sortants ou des demandes de session sortantes.

7. Procédé selon l'une quelconque des revendications 1 à 6, dans lequel des messages internes spécifiques au dispositif selon le protocole d'ouverture de session, SIP, IEFT, sont utilisés dans le cadre de la communication avec les dispositifs locaux, et des messages conformes au sous-système multimédia de protocole Internet, IP, IMS, selon le protocole SIP de sous-système IMS, sont utilisés dans le cadre de la communication avec le réseau de services multimédias.

8. Agencement dans une passerelle domestique (600) d'un réseau local (602) configuré de manière à fournir un enregistrement dans un réseau de services multimédias externe (604) pour un ou plusieurs dispositifs locaux présents dans le réseau local, comprenant :
- une unité de réception (600a) configurée de manière à recevoir une demande d'enregistrement local en provenance d'un premier dispositif local (A) ;
- une unité de mise en correspondance (600b) configurée de manière à stocker (600c) une mise en correspondance ou une association d'une identification de dispositif local correspondante du premier dispositif local à une première identité publique qui est valide dans le réseau de services multimédias ; et
- une unité d'enregistrement (600d) configurée de manière à enregistrer la première identité publique conjointement avec ladite identification de dispositif local du premier dispositif local dans le réseau de services multimédias pour le premier dispositif local ;
dans lequel la passerelle domestique est configurée de manière à diriger tout appel entrant ou toute demande de session entrante reçu(e) en provenance du réseau de services multimédias, et se référant à la première identité publique, vers le premier dispositif local ;
dans lequel, à chaque fois que des demandes d'enregistrement local sont reçues en provenance d'un ou plusieurs dispositifs locaux supplémentaires (B) dans le réseau local, l'unité de mise en correspondance est en outre configurée de manière à stocker une mise en correspondance ou une association d'une identification de dispositif local correspondante de chacun desdits dispositifs locaux supplémentaires à la première identité publique, et l'unité d'enregistrement est en outre configurée de manière à enregistrer la première identité publique en tant qu'une identité publique partagée conjointement avec chaque identification de dispositif local dans le réseau de services multimédias pour chacun desdits dispositifs locaux supplémentaires, et dans lequel la passerelle domestique est en outre configurée de manière à recevoir tout appel entrant ou toute demande de session entrante se référant à la première identité publique en provenance du réseau de services multimédias sous la forme d'appels individuels ou de demandes de session individuelles sur chacun parmi ledit premier dispositif local et lesdits dispositifs locaux supplémentaires.

9. Agencement selon la revendication 8, dans lequel, lorsqu'une demande d'enregistrement local indiquant une deuxième identité publique souhaitée est reçue en provenance d'un second dispositif local dans le réseau local, l'unité de mise en correspondance est en outre configurée de manière à stocker une mise en correspondance ou une association d'une identification de dispositif local correspondante du second dispositif local à la deuxième identité publique, et l'unité d'enregistrement est en outre configurée de manière à enregistrer la deuxième identité publique en tant qu'une identité publique individuelle avec ladite identification du second dispositif local dans le réseau de services multimédias pour le second dispositif local, dans lequel la passerelle domestique est configurée de manière à diriger tout appel entrant ou toute demande de session entrante reçu(e) en provenance du réseau de services multimédias et se référant à la deuxième identité publique uniquement vers le second dispositif local.

10. Agencement selon la revendication 9, dans lequel, lorsqu'une demande d'enregistrement local indiquant une troisième identité publique souhaitée est reçue en provenance d'un dispositif local exploité par un utilisateur particulier dans le réseau local, l'unité de mise en correspondance est en outre configurée de manière à stocker une mise en correspondance ou une association d'une identification d'utilisateur correspondante, à la troisième identité publique, et l'unité d'enregistrement est en outre configurée de manière à enregistrer la troisième identité publique en tant qu'une identité publique individuelle conjointement avec ladite identification d'utilisateur dans le réseau de services multimédias pour ledit utilisateur, dans lequel la passerelle est configurée de manière à diriger tout appel entrant ou toute demande de session entrante reçu(e) en provenance du réseau de services multimédias et se référant à la troisième identité publique uniquement vers un dispositif local exploité par ledit utilisateur.

11. Agencement selon l'une quelconque des revendications 9 à 10, dans lequel l'unité d'enregistrement est en outre configurée de manière à envoyer, au cours de chaque opération d'enregistrement, une demande d'enregistrement externe au réseau de services multimédias comprenant l'une desdites identités publiques et l'une desdites identifications de dispositifs locaux de dispositifs locaux ou d'identification d'utilisateur dans un en-tête de contact de la demande d'enregistrement externe.

12. Agencement selon l'une quelconque des revendications 9 à 11, dans lequel les identités publiques sont définies sous la forme de numéros de téléphone et/ou d'adresses électroniques.

13. Agencement selon l'une quelconque des revendications 9 à 12, apte à utiliser la mise en correspondance stockée ou l'association stockée, en vue de déterminer quelle identité publique utiliser pour des appels sortants ou des demandes de session sortantes.

14. Agencement selon l'une quelconque des revendications 9 à 13, apte à utiliser des messages internes spécifiques au dispositif selon le protocole d'ouverture de session, SIP, IEFT, dans le cadre de la communication avec les dispositifs locaux, et à utiliser des messages conformes au sous-système multimédia de protocole Internet, IP, IMS, selon le protocole SIP de sous-système IMS, dans le cadre de la communication avec le réseau de services multimédias.
